# EUROPÄISCHE PATENTSCHRIFT

(11) **EP 2 619 550 B1**
(45) Veröffentlichungstag und Bekanntmachung des Hinweises auf die Patenterteilung: **24.01.2018**
(21) Anmeldenummer: 11761323.2
(22) Anmeldetag: 16.09.2011
(51) Int. Cl.: G01N 21/41

(54) **SENSOR ZUR ÜBERWACHUNG EINES MEDIUMS**
SENSOR FOR MONITORING A MEDIUM
CAPTEUR DESTINÉ À LA SURVEILLANCE D'UN MILIEU

(30) Priorität: 21.09.2010 DE 202010012769 U; 21.09.2010 DE 102010041136
(43) Veröffentlichungstag der Anmeldung: 31.07.2013
(73) Patentinhaber: AB Elektronik Sachsen GmbH, 01738 Klingenberg (DE)
(72) Erfinder: BOJARSKI, Aldo, 01774 Höckendorf (DE); ERLER, Klaus, 23568 Lübeck (DE); KÜNZELMANN, Katrin, 01219 Dresden (DE); LEGNER, Andre, 01159 Dresden (DE); SMITH, Paul, Cambridge CB2 9HT (GB); STRAßBERGER, Tobby, 01774 Höckendorf (DE)
(74) Vertreter: Kailuweit & Uhlemann Patentanwälte Partnerschaft mbB
(86) Internationale Anmeldenummer: PCT/EP2011/066126
(87) Internationale Veröffentlichungsnummer: WO 2012/038346

(56) Entgegenhaltungen:
- EP-A2- 0 337 173
- JP-A- 1 197 632
- JP-B- 50 017 147
- US-A- 4 884 065
- US-A1- 2009 122 300

## Beschreibung

Die Erfindung betrifft Sensoren zur Überwachung eines Mediums mit einer elektromagnetischen Strahlungsquelle und einem Detektor für elektromagnetische Strahlung, wobei sich das Medium im Strahlengang zwischen der elektromagnetischen Strahlungsquelle und dem Detektor befindet und sich die Brechung bei Änderung des Mediums ändert.

Durch die Druckschrift DE 10 2007 010 805 B3 ist ein Verfahren und eine Vorrichtung zur Bestimmung der Harnstoffkonzentration in einer Lösung bekannt. Dazu wird Licht unter verschiedenen Einfallswinkeln auf eine Grenzfläche zwischen einem dichteren und einem dünneren Medium, nämlich dem Körper und der Lösung, ausgesendet. Dazu muss eine Grenzfläche zwischen dem Körper und der Lösung vorhanden sein. Das Licht wird an der Grenzfläche je nach Einfallswinkel zum Teil reflektiert, wobei mit zunehmendem Einfallswinkel der von der Grenzfläche reflektierte Anteil des Lichts zunimmt. Die reflektierte Strahlung wird von einem entsprechend angeordneten ortsauflösenden Strahlungsdetektor detektiert.

Die Druckschrift DE 10 2008 056 559 A1 beinhaltet eine Sensoranordnung zur Detektion eines ersten flüssigen Mediums in einem zweiten flüssigen Medium mittels Reflektion eines emittierten Lichtstrahls sowie einem zugehörigen Empfänger. Dazu sind zwei in einem Gehäuse gekapselte Glasstablinsen parallel zueinander angeordnet. Die Glasstablinsen weisen einen anderen optischen Brechungsindex als die flüssigen Medien auf. Gegenüber den Glasstablinsen ist eine Reflektionsfläche angeordnet, die mit dem Gehäuse verbunden ist.

Nachteilig sind, dass Ablagerungen und Verschmutzungen der Grenzfläche oder der Reflektionsfläche das Messergebnis verfälschen können.

Durch die Druckschrift EP 0 337 173 A2 ist eine Einrichtung zur Detektion eines alkoholischen Gehalts bekannt. Der dabei verwendete Sensor besitzt eine elektromagnetische Strahlungsquelle und einen Detektor für elektromagnetische Strahlung, wobei sich das Medium im Strahlengang zwischen der elektromagnetischen Strahlungsquelle und dem Detektor befindet. Zwischen der elektromagentischen Strahlungsquelle und dem Detektor befindet sich ein transparenter Körper als ein separater Bestandteil des Sensors mit einer Vertiefung für das Medium. Das Gehäuse nimmt den transparenten Körper auf, wobei letzterer gegenüber der Strahlungsquelle und dem Detektor abgedichtet ist.

Die Druckschrift JP 50 017147 B zeigt einen Sensor, dessen Gehäuse transparente separate Bestandteile aufweist, an denen das zu untersuchende Medium anliegt. Eine elektromagnetische Strahlungsquelle und ein Detektor sind beabstandet zueinander in einem durch die transparenten Bestandteile bereichsweise begrenzten Gehäuseinneren angeordnet.

Die Druckschrift US 4 884 065 A beschreibt eine Einrichtung zur Detektion von Luft in einer Flüssigkeitsleitung. Der darin aufgeführte Detektor besitzt zwei V-förmig angeordnete transparente Segmente. An dem durch diese Segmente gebildeten freien Raum befindet sich die fließende Flüssigkeit zur Detektion von darin eventuell enthaltener Luft. Die Segmente sind dicht miteinander und an einem Gehäuse angeordnet.

Der im Patentanspruch 1 angegebenen Erfindung liegt die Aufgabe zugrunde, die Stoffzusammensetzung eines Mediums einfach zu überwachen.

Diese Aufgabe wird mit den im Patentanspruch 1 aufgeführten Merkmalen gelöst.

Die Sensoren zur Überwachung eines Mediums mit einer elektromagnetischen Strahlungsquelle und einem Detektor für elektromagnetische Strahlung, wobei sich das Medium im Strahlengang zwischen der elektromagnetischen Strahlungsquelle und dem Detektor befindet und sich die Brechung bei Änderung des Mediums ändert, zeichnen sich durch ihre einfache Realisierung aus.

Dazu ist ein erstes Teil des Gehäuses ein becherförmiges und aus einem für die Strahlung transparenten Material bestehendes einstückiges Formteil. Die elektromagnetische Strahlungsquelle, der Detektor und die Strahlung der elektromagnetischen Strahlungsquelle nacheinander zweimal ablenkende Spiegel sind im ersten Teil angeordnet, so dass die elektromagnetische Strahlungsquelle und der Detektor nebeneinander platzierbar sind. Wenigstens eine plattenförmige Wand eines Ausschnitts des ersten Teils für das Medium ist mit einem Winkel verschieden von 90° zur Strahlung angeordnet. Ein zweites Teil des Gehäuses ist ein Deckel, so dass ein in sich abgeschlossener Sensor realisiert ist. Weiterhin ist der Detektor aus in einer Reihe oder in einer Matrix angeordneten Fotodioden mit einem Datenverarbeitungssystem zur Bestimmung des Ortes der auf den Detektor gelangten elektromagnetischen Strahlung aus der Position der Fotodioden des Detektors verbunden.

Durch den Sensor wird mittels des Durchlichtprinzips Medium überwacht. Bei einer Änderung des Mediums ändert sich die Brechzahl des Mediums und daraus folgernd der Brechungswinkel. Die Position der Strahlung gegenüber dem Detektor verschiebt sich. Fällt entweder Strahlung oder keine Strahlung auf den Detektor, so ist das ein Maß für die Änderung des Mediums. Dieser Zustand wird detektiert und ist signalisierbar. Das Maß für die Änderung wird über die Größe des Chips der Fotodiode bestimmt. Nach einer Korrektur des Mediums fällt die Strahlung wieder auf die Fotodiode, so dass der Normalzustand erreicht ist.

Der Detektor besteht aus in einer Reihe oder in einer Matrix angeordneten Fotodioden, so dass der Ort der auf den Detektor gelangten elektromagnetischen Strahlung aus der Position der Fotodioden und daraus das Medium und eine Änderung des Mediums erfassbar ist. Die Anzahl, die Größe und die Abstände der Fotodioden bestimmen die Genauigkeit des Sensors. Der Sensor ist dazu ein bekanntes Array. Damit sind insbesondere auch die Grade einer Nichtübereinstimmung detektierbar.

Ein erstes Teil des Gehäuses ist ein becherförmiges und aus einem für die Strahlung transparenten Material bestehendes Formteil. Das erste Teil weist weiterhin eine Vertiefung oder ein Ausschnitt für das Medium auf. Wenigstens eine Wand des Ausschnitts als Bereich des Gehäuses ist so angeordnet oder so ausgebildet, dass die Strahlung zur Brechung mit einem Winkel verschieden von 90° auf die Oberfläche trifft oder von dieser austritt. Abgeschlossen ist das Gehäuse mit einem Deckel als ein zweites Teil des Gehäuses. Im ersten Teil sind wenigstens die elektromagnetische Strahlungsquelle und der Detektor angeordnet. Der Bereich des Gehäuses mit der Vertiefung oder dem Ausschnitt ist im Medium platziert, so dass sich Medium auch in der Vertiefung oder dem Ausschnitt befindet. Über sich gegenüberliegende Wandbereiche der Vertiefung oder des Ausschnitts wird die Strahlung aus- und nach Durchtritt des Mediums eingekoppelt.

Ein weiterer Vorteil besteht darin, dass ansonsten zu einer Intensitätsänderung führende Verschmutzungen am Gehäuse keinen Einfluss auf die Erfassung ausüben. Das Gleiche gilt für das Medium trübende Bestandteile im Medium. Entscheidend für die Erfassung ist der Auftreffort der elektromagnetischen Strahlung und nicht deren Intensität. Damit haben auch Alterungsprozesse der Strahlungsquelle und des Detektors keinen Einfluss auf den Sensor zur Überwachung eines Mediums.

Damit ist ein einfacher Sensor zur Überwachung eines Mediums, das bei einer Änderung seine Brechzahl ändert, realisiert.

Darüber hinaus zeichnet sich der Sensor dadurch aus, dass sich nur das Medium außerhalb des Gehäuses befindet. Alle Bestandteile des Sensors sind im Gehäuse angeordnet, so dass ein kompakter Sensor vorhanden ist. Im einfachsten Fall sind dazu die elektromagnetische Strahlungsquelle und der Detektor sich gegenüberstehend angeordnet, wobei sich ein Raum für das Medium dazwischen befindet.

Eine vorteilhafte Ausgestaltung der Erfindung ist im Patentanspruch 2 angegeben.

Günstigerweise ist nach der Weiterbildung des Patentanspruchs 2 das Medium eine wässrige Lösung, so dass die Konzentration wenigstens eines Stoffes in der wässrigen Lösung erfassbar ist.

Ein Ausführungsbeispiel der Erfindung ist in den Zeichnungen jeweils prinzipiell dargestellt und wird im Folgenden näher beschrieben.

Es zeigen:
Fig. 1 ein Sensor zur Überwachung eines Mediums in einem Längsschnitt und
Fig. 2 einen Sensor in einer Schnittdarstellung.

Ein Sensor zur Überwachung eines Mediums besteht im Wesentlichen aus einer elektromagnetischen Strahlungsquelle 1, einem Detektor 2, einer die Strahlung ablenkenden Vorrichtung 3 und einem Gehäuse 5.

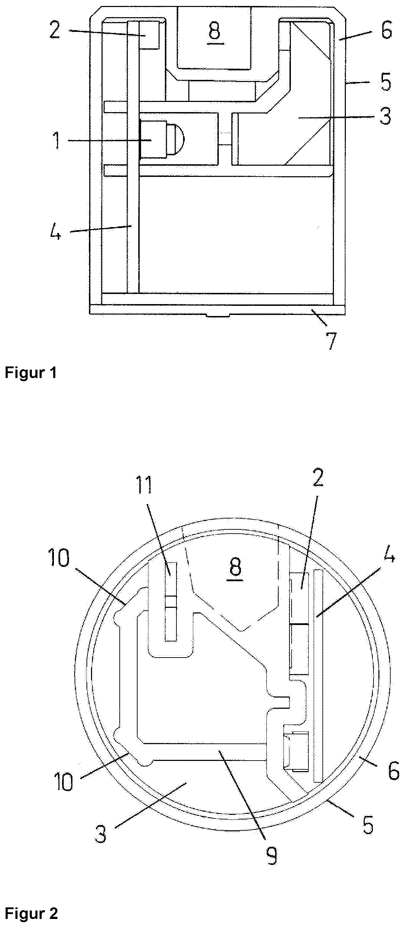

Die Fig. 1 zeigt einen Sensor zur Überwachung eines Mediums in einem Längsschnitt in einer prinzipiellen Darstellung.

Das Medium ist beispielsweise eine wässrige Lösung. Bekannterweise werden für die elektromagnetische Strahlungsquelle 1 eine Lumineszenzdiode 1 und für den Detektor 2 ein CCD-Sensor 2 mit Fotodioden eingesetzt, wobei CCD für Charge-coupled Device steht. Dieser ist als eindimensionaler (Zeile) oder zweidimensionaler (Matrix) CCD-Sensor 2 ausgeführt.

Die Lumineszenzdiode 1 und der CCD-Sensor 2 sind nebeneinander auf einer Leiterplatte 4 als Träger 4 angeordnet.

Die Leiterplatte 4 befindet sich in einem ersten Teil 6 des Gehäuses 5. Dieser erste Teil 6 ist becherförmig ausgebildet und besteht aus einem für die Strahlung der Lumineszenzdiode 1 transparenten Material. Weiterhin ist dieses erste Teil 6 ein einstückig ausgebildetes Formteil, welches einen Ausschnitt 8 / eine Aussparung für das Medium aufweist.

Im Strahlengang nach der Lumineszenzdiode 1 ist die die Strahlung ablenkende Vorrichtung 3 mit zwei Prismen oder Spiegeln angeordnet, so dass die Strahlung nacheinander zweimal um 90° abgelenkt wird. Der Eintritt der Vorrichtung 3 ist in der Ebene der Lumineszenzdiode 1 angeordnet, so dass deren elektromagnetische Strahlung in die Vorrichtung 3 eingekoppelt wird. Der Austritt zur Auskopplung der zweimal um 90° abgelenkten elektromagnetischen Strahlung der Lumineszenzdiode 1 ist in der Ebene des CCD-Sensors 2 angeordnet. Zwischen der Vorrichtung 3 und dem CCD-Sensor 2 befindet sich der Ausschnitt 8 für das Medium, so dass über Wandbereiche des Ausschnitts die elektromagnetische Strahlung diese Wandbereiche und den durch den Raum ausgebildeten Raum des Ausschnitts 8 durchdringt. Wenigstens eine Wand des Ausschnitts 8 ist so angeordnet oder so ausgebildet, dass die Strahlung zur Brechung mit einem Winkel verschieden von 90° auf die Oberfläche trifft oder von dieser austritt. Dazu ist beispielsweise entweder eine plattenförmige Wand mit einem Winkel verschieden 90° zur Strahlung angeordnet oder diese Wand keilförmig ausgebildet.

Im Einsatzfall befindet sich Medium in diesem Ausschnitt 8, so dass die Strahlung im Ausschnitt befindliches Medium durchdringt.

Vorteilhafterweise sind die optischen Elemente so angeordnet, dass die Strahlung im Normalfall mittig auf den CCD-Sensor 2 gelangt. Ändert sich die Zusammensetzung des Mediums, ändert sich auch dessen Brechzahl und damit der Brechungswinkel. Die Strahlung der Lumineszenzdiode 1 gelangt auf einen gegenüber dem Normalfall anderen Ort und damit auf eine andere Fotodiode des CCD-Sensors 2. Der Ort und damit die Position ist detektier- und signalisierbar.

In einer ersten Ausführungsform ist die Lumineszenzdiode 1 gegenüber dem Medium beabstandet über dem CCD-Sensor 2 angeordnet (Darstellung in der Fig. 1).

In einer zweiten Ausführungsform ist die Lumineszenzdiode 1 beabstandet neben dem CCD-Sensor 2 angeordnet.

Die Fig. 2 zeigt dazu einen Sensor in einer prinzipiellen Schnittdarstellung.

Im Strahlengang nach der Lumineszenzdiode 1 ist die die Strahlung ablenkende Vorrichtung 3 mit die Strahlung reflektienden Einrichtungen 10 in Form von Spiegeln 10 in einem Lichtleitkanal 9 angeordnet, so dass die Strahlung nacheinander zweimal um 90° abgelenkt wird. Die die Strahlung ablenkende Vorrichtung 3 und das erste Teil 6 des Gehäuses 5 sind dabei entweder mehr- oder einstückig ausbildbar. Die Lumineszenzdiode 1, der CCD-Sensor 2, die Vorrichtung 3 und der Ausschnitt 8 befinden sich dabei in einer Ebene. In einer Variante dieser zweiten Ausführungsform ist eine Schlitzblende 11 ein Bestandteil der Vorrichtung 3.

Das zweite Teil 7 des Gehäuses 5 ist ein Deckel 7, so dass ein in sich abgeschlossener Sensor zur Überwachung des Mediums realisiert ist.

In einer weiteren Ausführungsform ist der CCD-Sensor 2 mit einem Datenverarbeitungssystem zur Bestimmung des Ortes der auf den CCD-Sensor 2 gelangten Strahlung aus der Position der Lumineszenzdioden. Das Datenverarbeitungssystem ist dazu ein bekannter Mikrocontroller und befindet sich vorteilhafterweise auf der Leiterplatte 4.

## Patentansprüche

1. Sensor zur Überwachung eines Mediums mit einer elektromagnetischen Strahlungsquelle und einem Detektor für elektromagnetische Strahlung, wobei sich das Medium im Strahlengang zwischen der elektromagnetischen Strahlungsquelle und dem aus Fotodioden bestehenden Detektor befindet und sich die Brechung bei Änderung des Mediums ändert, wobei
- ein erstes Teil (6) eines Gehäuses (5) ein becherförmiges und aus einem für die Strahlung transparenten Material bestehendes einstückiges Formteil ist,
- die elektromagnetische Strahlungsquelle (1), der Detektor (2) und die Strahlung der elektromagnetischen Strahlungsquelle (1) nacheinander zweimal ablenkende Spiegel (10) im ersten Teil (6) des Gehäuses (5) angeordnet sind, so dass die elektromagnetische Strahlungsquelle (1) und der Detektor (2) nebeneinander platziert sind,
- wenigstens eine plattenförmige Wand eines Ausschnitts (8) des ersten Teils (6) des Gehäuses (5) für das Medium mit einem Winkel verschieden von 90° zur Strahlung angeordnet ist,
- dass ein zweites Teil (7) des Gehäuses (5) ein Deckel (7) ist, so dass durch das erste und zweite Teil des Gehäuses (5) ein in sich abgeschlossener Sensor realisiert ist, und
- der Detektor (2) aus in einer Reihe oder in einer Matrix angeordneten Fotodioden besteht und mit einem Datenverarbeitungssystem zur Bestimmung des Ortes der auf den Detektor (2) gelangten elektromagnetischen Strahlung aus der Position der Fotodioden des Detektors (2) verbunden ist.

2. Sensor nach Patentanspruch 1, **dadurch gekennzeichnet, dass** das Medium eine wässrige Lösung ist, so dass die Konzentration wenigstens eines Stoffes in der wässrigen Lösung erfassbar ist.

## Claims

1. Sensor for monitoring a medium, comprising an electromagnetic radiation source and a detector for electromagnetic radiation, wherein the medium is in the beam path between the electromagnetic radiation source and the detector, which consists of photodiodes, and the refraction changes when the medium is changed, wherein
- a first part (6) of a housing (5) is a cup-shaped single-piece shaped part consisting of a material that is transparent to the radiation,
- the electromagnetic radiation source (1), the detector (2) and mirrors (10) that deflect the radiation from the electromagnetic radiation source (1) twice in sequence are arranged in the first part (6) of the housing (5) such that the electromagnetic radiation source (1) and the detector (2) are placed one adjacent to the other,
- at least one planar wall of a cut-out (8) in the first part (6) of the housing (5) for the medium is arranged at an angle of other than 90° to the radiation,
- a second part (7) of the housing (5) is a cover (7) such that a self-contained sensor is produced by means of the first and second parts of the housing (5), and
- the detector (2) consists of photodiodes arranged in a row or in a matrix and is connected to a data-processing system for determining the location of the electromagnetic radiation that has reached the detector (2), from the position of the photodiodes of the detector (2).

2. Sensor according to claim 1, **characterised in that** the medium is an aqueous solution such that the concentration of at least one substance in the aqueous solution can be detected.

## Revendications

1. Capteur pour la surveillance d'un milieu doté d'une source de rayonnement électromagnétique et d'un détecteur pour le rayonnement électromagnétique, dans lequel le milieu se trouve dans la trajectoire de faisceau entre la source de rayonnement électromagnétique et le détecteur constitué de photodiodes et la réfraction se modifie lors de la modification du milieu, dans lequel
- une première partie (6) d'un boîtier (5) est une pièce moulée d'un seul tenant de la forme d'un bécher et constituée d'un matériau transparent pour le rayonnement,
- la source de rayonnement électromagnétique (1), le détecteur (2) et le rayonnement de la source de rayonnement électromagnétique (1) sont agencés l'un après l'autre en miroir (10) doublement déviant dans la première partie (6) du boîtier (5), de sorte que la source de rayonnement électromagnétique (1) et le détecteur (2) sont placés l'un à côté de l'autre,
- au moins une paroi en forme de plaque d'une section (8) de la première partie (6) du boîtier (5) pour le milieu est agencée avec un angle différent de 90° par rapport au rayonnement,
- qu'une seconde partie (7) du boîtier (5) est un couvercle (7), de sorte que, via la première et la seconde partie du boîtier (5), un capteur fermé est réalisé en soi, et
- le détecteur (2) est constitué de photodiodes agencées en ligne ou dans une matrice et est relié avec un système de traitement des données pour déterminer le lieu du rayonnement électromagnétique parvenant sur le détecteur (2) à partir de la position des photodiodes du détecteur (2).

2. Capteur selon la revendication 1, **caractérisé en ce que** le milieu est une solution aqueuse de sorte que la concentration d'au moins une matière dans la solution aqueuse peut être détectée.
